(19) **Europäisches Patentamt**

**European Patent Office**

**Office européen des brevets**

(11) Veröffentlichungsnummer: **0 257 407 B1**

(12) **EUROPÄISCHE PATENTSCHRIFT**

(45) Veröffentlichungstag der Patentschrift: **11.11.92**

(21) Anmeldenummer: **87111431.0**

(22) Anmeldetag: **07.08.87**

(51) Int. Cl.⁵: **H02K 5/14**, H01R 39/40

(54) **Elektrische Maschine, insbesondere Elektromotor.**

(30) Priorität: **27.08.86 DE 3629138**
**31.07.87 DE 3725402**

(43) Veröffentlichungstag der Anmeldung:
**02.03.88 Patentblatt 88/09**

(45) Bekanntmachung des Hinweises auf die
Patenterteilung:
**11.11.92 Patentblatt 92/46**

(84) Benannte Vertragsstaaten:
**ES FR GB IT SE**

(56) Entgegenhaltungen:
**DE-A- 3 328 683**
**FR-A- 2 209 239**
**US-A- 3 739 205**

(73) Patentinhaber: **SWF Auto-Electric GmbH**
**Stuttgarter Strasse 119 Postfach 135**
**W-7120 Bietigheim-Bissingen(DE)**

(72) Erfinder: **Baumeister, Udo**
**Parkäckerstrasse 18**
**W-7120 Bietigheim-Bissingen(DE)**
Erfinder: **Walther, Bernd**
**Birkenweg 20**
**W-7120 Bietigheim-Bissingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elektrische Maschine, insbesondere einen Elektromotor, der die Merkmale aus dem Oberbegriff des Anspruchs 1 aufweist.

Bei der Endmontage derartiger Maschinen besteht das Problem, den Kollektor auf möglichst einfache und zeitsparende Weise zwischen die in Richtung auf die Kollektorlauffläche federnd vorgespannten Bürsten zu bringen. Üblicherweise werden dazu die Bürsten in einer Montagestellung arretiert, in der sie einen gewissen Abstand von der Kollektorlauffläche aufweisen, so daß der Kollektor frei zwischen die Bürsten gebracht werden kann. Nach der Montage des Ankers wird die Arretierung gelöst, so daß die Bürsten auf die Kollektorlauffläche auffedern können.

Ein Elektromotor mit den Merkmalen aus dem Oberbegriff des Anspruchs 1 ist durch die DE-OS 33 28 683 bekannt. In dieser Schrift werden zwei verschiedene Möglichkeiten gelehrt, wie die Haltezunge ausgelenkt und damit die Arretierung der Bürsten gelöst werden kann. Bei der ersten Ausführung weist der Gehäusemantel in Höhe der Bürstentragplatte eine Aussparung auf, durch die nach dem Zusammenbau des Elektromotors ein Werkzeug eingeführt werden kann, mit dem die Haltezunge soweit ausgelenkt werden kann, daß sie dauernd verformt bleibt und nicht mehr in ihre Montagestellung zurückfedert. Nachteilig an dieser Ausführung ist, daß die Gehäusewand eine Öffnung aufweisen muß, die nur nachträglich in einem weiteren Arbeitsschritt verschlossen werden kann, und daß ein Arbeitsschritt zum Auslenken der Haltezunge notwendig ist.

In einer zweiten Ausführung steht auf der Innenseite des Gehäusemantels ein Vorsprung vor, der bei der Montage am freien Ende der Haltezunge anschlägt und die Arretierung der Bürste selbsttätig löst. Hier befindet sich zwar keine Öffnung in Gehäusemantel, der Vorsprung ist jedoch nicht auf einfache Weise herzustellen. Besondere Schwierigkeiten, einen solchen Vorsprung zu formen, bestehen dann, wenn er sich aus konstruktiven Gründen gerade an der Naht des üblicherweise aus einem Blech gerollten Gehäusemantels befinden muß.

Der vorliegenden Erfindung liegt also die Aufgabe zugrunde, eine elektrische Maschine mit den Merkmalen aus dem Oberbegriff des Anspruchs 1 so auszubilden, daß die einzelnen Teile leicht herzustellen sind und dabei eine einfache und zeitsparende Montage erhalten bleibt.

Erfindungsgemäß wird diese Aufgabe in einer ersten Weise dadurch gelöst, daß bei einer elektrischen Maschine mit den Merkmalen aus dem Oberbegriff des Anspruchs 1 die Haltezunge mit einem Lösestück an ihrem freien Ende in eine stirnseitig offene Aussparung des Gehäusemantels hineinragt, in die es während der Montage gelangt, Aussparung vollständig verschließt.

Eine Aussparung im Gehäusemantel läßt sich leicht herstellen. Durch die Öffnung der Aussparung zur Stirnseite des Gehäusemantels hin kann das Lösestück der Haltezunge durch eine axiale Bewegung des Gehäusemantels und der Bürstentragplatte gegeneinander in die Aussparung gelangen und durch den Gehäusemantel ausgelenkt werden. Es ist kein weiterer Arbeitsschritt zum Lösen der Bürstenarretierung notwendig.

Will man keine Aussparung im Gehäusemantel haben, so läßt sich die gestellte Aufgabe unter Zugrundelegung desselben Erfindungsgedankens dadurch lösen, daß bei einer elektrischen Maschine mit den Merkmalen aus dem Oberbegriff des Anspruchs 1 die Haltezunge mit einem Lösestück an ihrem freien Ende bis über die Stirnseite des Gehäusemantels reicht und das Lösestück in eine Aussparung des Deckels hineinragt, in die es während der Montage gelangt, und dieses Lösestück auch die Aussparung im Deckel vollständig verschließt. Anstelle einer Aussparung im Gehäusemantel ist bei dieser Lösung also eine Aussparung im Deckel vorgesehen.

Vorteilhafte Ausgestaltungen einer erfindinngsgemäßen elektrischen Maschine sind in den Unteransprüchen enthalten.

Eine weitgehend ebene Außenfläche des Gehäuses erhält man, wenn man nach der Lehre des Anspruchs 3 für die Form des Lösestücks berücksichtigt, daß nach der Montage die Haltezunge ausgelenkt ist, und deshalb eine Außenfläche des Lösestücks im entspannten Zustand der Haltezunge derart schräg verlaufen läßt, daß sie nach der Montage bündig mit der Außenseite des Gehäusemantels bzw. des Deckels abschließt.

Bei einer Ausbildung nach Anspruch 4 ist gewährleistet, daß zwischen dem Lösestück und dem Boden der Aussparung im Gehäusemantel kein Spalt entsteht. Am günstigsten ist es dabei, wenn gemäß Anspruch 5 die der Stirnseite des Gehäusemantels zugewandte Fläche des Lösestücks nach der Montage flächig auf der Stirnseite des Gehäusemantels aufliegt. Die Flächenpreßung zwischen der Haltezunge und dem Gehäusemantel ist dann so gering, daß ein Einarbeiten des Gehäusemantels in die vorzugsweise mit der Bürstentragplatte aus Kunststoff geformte Haltezunge weitgehend ausgeschlossen ist und somit die Haltezunge während der Lebensdauer der Maschine ihre Lage beibehält.

Bei einer Ausbildung nach Anspruchs 6, läßt sich das Lösestück der Haltezunge besonders einfach in die Aussparung des Gehäusemantels einführen. Vorzugsweise ist jede Haltezunge einstückig mit der Bürstentragplatte ausgebildet, die auch mit dem Deckel identisch sein kann.

Um die federnden Eigenschaften der Haltezungen zu verbessern, um insbesondere eine größere wirksame Federlänge bis zu einer in die Bürste eingreifende Rastnase der Haltezunge zu erhalten, ist eine Ausbildung gemäß Anspruch 8 von Vorteil.

Durch Weiterbildungen gemäß den Ansprüchen 9 und 10 kann die Dichtheit des Gehäuses der elektrischen Maschine noch verbessert werden.

Bei beiden Ausführungen ist die Länge der außen sichtbaren Fugen zwischen der Haltezunge und dem Deckel bzw. dem Dehäusemantel beträchtlich reduziert, so daß Feuchtigkeit und Staub weniger leicht in das Gehäuse eindringen können. Bevorzugt wird eine Ausführung einer elektrischen Maschine, bei der die Aussparung im Deckel sowohl axial als auch radial nach außen verschlossen ist und somit eine sich lediglich in das Innere des Gehäuses öffnende Tasche darstellt. Außen sichtbare Anlageflächen zwischen der Haltezunge und dem Deckel bzw. dem Gehäusemantel gibt es dann nicht mehr, so daß das Gehäuse sehr dicht ist.

Vorteilhaft ist auch eine Ausführung gemäß Anspruch 11, bei der die Haltezunge radial vor der Außenseite des Gehäusemantels endet. Der Deckel kann dann auf seinem Umfang auch dann noch mit der Außenfläche des Gehäusemantels fluchten, wenn die Aussparung in ihm radial verschlossen ist. Dabei hat man sich die Erkenntnis zunutze gemacht, daß der Gehäusemantel nicht auf seiner gesamten Stärke an der Haltezunge angreifen muß.

Die Aussparung für das Lösestück einer Haltezunge kann sich auch in einem Kragen des Deckels befinden.

Damit die Haltezunge eine dichte Anlage zwischen dem Deckel und dem Gehäusemantel nicht behindern kann, ist gemäß Anspruch 13 die axiale Abmessung der Aussparung größer als die entsprechende Abmessung des Lösestücks der Haltezunge.

Die Aussparung im Deckel kann man auf besonders einfache Weise erhalten, wenn der Deckel in einem Spritzgußverfahren hergestellt ist.

Die Erfindung und weitere vorteilhafte Ausgestaltungen werden nachstehend anhand der in der Zeichnung dargestellten Ausführungsbeispiele näher erläutert. Es zeigen:

Fig. 1    einen Teilschnitt durch eine Bürstentragplatte mittig einer an diese angeformten Haltezunge,

Fig. 2    eine Ansicht der Haltezunge in Richtung des Pfeiles A aus Fig. 1,

Fig. 3    eine Ansicht des Gehäusemantels eines Elektromotors mit einer Aussparung für das Lösestück einer Haltezunge,

Fig. 4    einen Teilschnitt durch einen Elektromotor mit einer darin montierten Bürstentragplatte nach Fig. 1,

Fig. 5    einen Teilschnitt durch eine zweite Ausführung eines Elektromotors, bei der sich im Deckel Aussparungen für die Lösestücke der Haltezungen befinden,

Fig. 6    den Deckel eines Motorengehäuses einer dritten Ausführung, wobei am Deckel eine Bürstentragplatte mit durch Haltezungen arretierten Bürsten montiert ist, und

Fig. 7    ein Motorengehäuse, bei dem ein Deckel nach Figur 6 mit einem Gehäusemantel zusammengebaut ist.

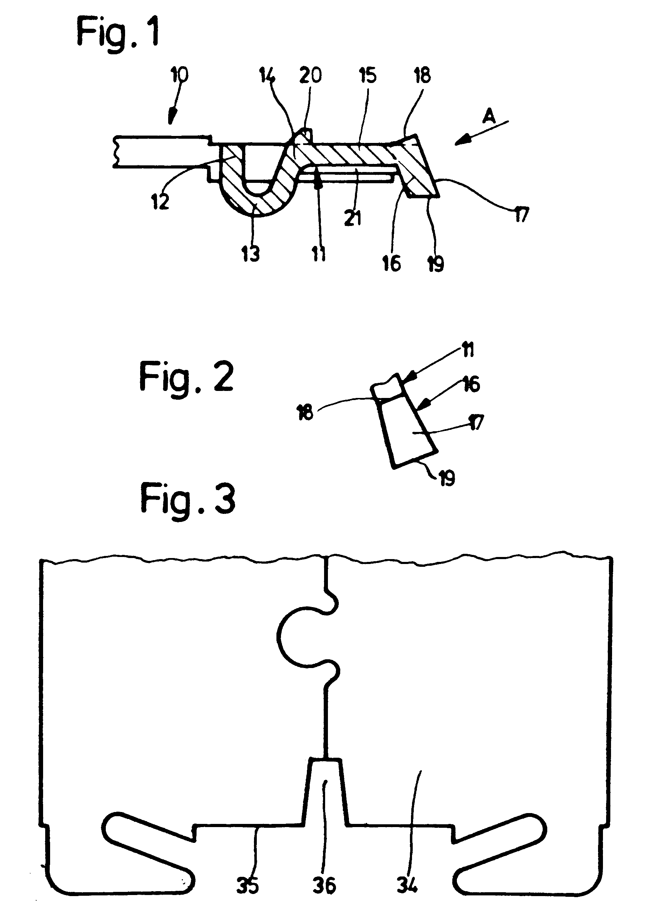

An die aus einem elastischen Kunststoff hergestellte Bürstentragplatte 10 nach Fig. 1 sind zwei Haltezungen 11 einstückig angeformt, die sich, sich diametral gegenüberliegend, in radialer Richtung erstrecken und von denen in Fig. 1 nur eine gezeigt ist. Die Haltezunge 11 beginnt an einem inneren Ring 12 der Bürstentragplatte 10 und geht von diesem an der Seite, die der Seite, auf der die Bürstentragplatte 10 mit den Köchern für die Kohlebürsten bestückt wird, gegenüberliegt, in axialer Richtung ab. Die Haltezunge beschreibt dann einen ersten Bogen 13 von etwa 180° und dann einen weiteren entgegengesetzt gerichteten Bogen 14 von etwa 90°, der in einen geraden in axialer Richtung auf Höhe des inneren Rings 12 liegenden Abschnitt 15 übergeht. Am freien Ende trägt die Haltezunge 11 ein Lösestück 16, dessen Außenfläche 17 um etwa 18° gegen die Achse der Bürstentragplatte 10 geneigt ist. Die das Lösestück 16 zur einen Stirnseite der Bürstentragplatte 10 hin abschließende Fläche 18 verläuft senkrecht zur Fläche 17 und ist somit um 72° gegen die Achsrichtung der Bürstentragplatte 10 geneigt. Die Fläche 18 geht in einem Knick in eine Außenfläche des ebenen Abschnitts 15 der Haltezunge über. Das Lösestück 16 erstreckt sich auf der gegenüberliegenden Seite des Abschnitts 15 der Haltezunge 11 über diesen Abschnitt 15 hinaus und wird dort durch eine Fläche 19 begrenzt, die senkrecht auf der Achsrichtung der Bürstentragplatte 10 steht.

Wie man aus Fig. 2 ersieht, hat die Außenfläche 17 des Lösestücks 16 die Form eines Trapezes mit der langen Seite an der Außenfläche 19 und der kurzen Seite an der Außenfläche 18 des Lösestücks 16. Das Lösestück 16 verjüngt sich also ausgehend von der Außenfläche 19 konisch zur Außenfläche 18 hin.

Am radial inneren Ende des ebenen Abschnitts 15 trägt die Haltezunge 11 eine Rastnase 20, die die Form eines zur Achse der Bürstentragplatte 10 hin abfallenden Sägezahns besitzt. Radial außerhalb dieser Rastnase ist ein Verbiegen der Haltezunge 11 bei der Montage nicht vorteilhaft. Deshalb ist der ebene Abschnitt 15 auf der der Rastnase 20 gegenüberliegenden Seite durch eine Rippe 21 verstärkt.

Bei der Montage eines Elektromotors wird zunächst die Bürstentragplatte mit den verschiedenen Bauteilen, insbesondere mit den in metallischen Köchern 30 vormontierten Kohlebürsten 31 bestückt und dann an einem Deckel 32 des Motorengehäuses 33 befestigt.

Zu diesem Motorengehäuse 33 gehört ein Gehäusemantel 34, der in Fig. 3 näher dargestellt ist. Der Gehäusemantel 34 ist aus einem ebenen Blech gerollt, dessen beide axialen Seitenkanten in bekannter Weise schwalbenschwanzartig ineinandergreifen. Aus konstrukiven Gründen genau an der Naht des Gehäusemantels 34 ist aus ihm eine zur Stirnseite 35 hin offene Aussparung 36 ausgestanzt, die sich von der Stirnseite 35 her konisch verjüngt, und in ihrer Kontur der Kontur der Fläche 17 der Haltezunge 11 entspricht.

Bevor die Baueinheit aus Deckel 32 und Bürstentragplatte 10 auf den Gehäusemantel 34 des Elektromotors aufgesetzt wird, greifen die Haltezungen 11 mit ihren Rastnasen 20 durch einen Durchbruch 83 in Köchern 30 hindurch in eine Vertiefung 40 der gegen die Kraft einer Druckfeder 41 zurückgeschobenen Kohlebürsten 31 und halten diese in einem Abstand, der größer ist als der Durchmesser des Kollektors 42 des Motorankers 43. Die Haltefedern 11 sind so lang, daß sie bei der Montage mit ihrem Lösestück 16 jeweils in eine Aussparung 36 des Gehäusemantels 34 gelangen. Nachdem die Kohlebürsten teilweise über den Kollektor geschoben sind, stoßen die Lösestücke 16 mit ihren Flächen 18 gegen den Boden der Aussparungen 36 und werden bei der weiteren axialen Bewegung des Deckels 32 und des Gehäusemantels 34 gegeneinander ausgelenkt.Die Rastnasen 20 verlassen die Vertiefungen 40 der Kohlebürsten 31, so daß diese von den Federn 41 gegen die Lauffläche des Kollektors 42 gedrückt werden. Um sicherzustellen, daß die Durckfedern 41 von den Rastnasen 20 nicht behindert werden, werden die Haltezungen 11 so weit ausgelenkt, daß sich die Rastnasen 20 nach der Montage völlig außerhalb der Köcher 30 befinden.

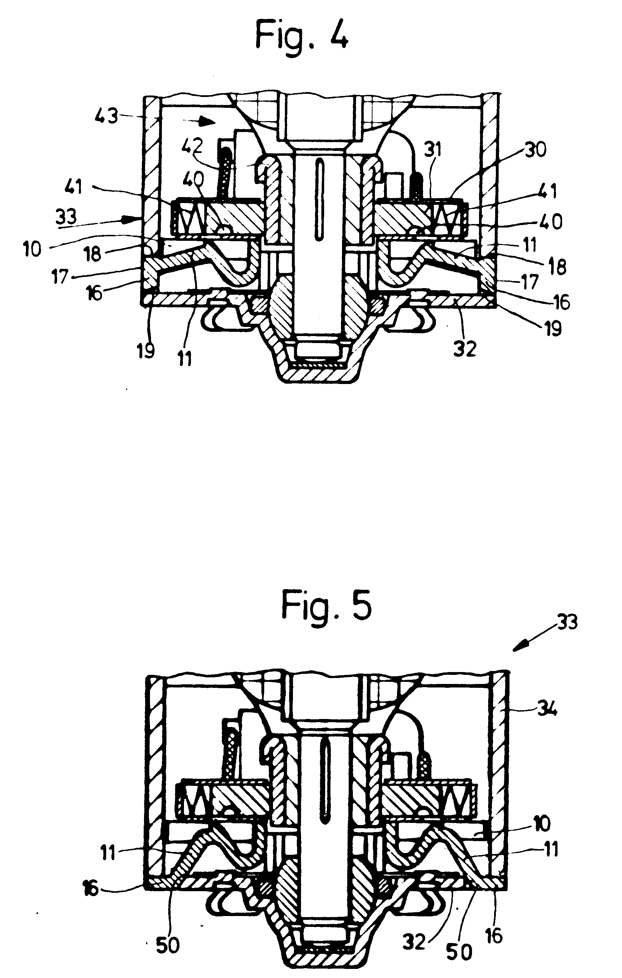

Wie aus Fig. 4 deutlich zu ersehen ist, sind die Haltezungen 11 während der Montage soweit ausgelenkt worden, daß danach die Außenfläche 18 des Lösestücks 16 voll auf dem Boden der Aussparungen 36 im Gehäusemantel 34 aufliegt und kein Spalt vorhanden ist. Die Außenflächen 17 der Lösestücke 16 schließen bündig mit der Außenfläche der Gehäusemantels 34 ab. Die Außenfläche 19 der Lösestücke 16 ist zwar nun zur Stirnseite des Gehäusemantels 34 geneigt. Zwischen ihr und dem Deckel 32 besteht jedoch kein Spalt, da die Fläche 19 von außen nach innen ansteigt.

Bei dem in Fig. 5 gezeigten Ausführungsbeispiel sind nicht im Gehäusemantel 34, sondern im Deckel 32 des Motorengehäuses 33 Aussparungen für Lösestücke 16 der Haltezungen 11 vorgesehen. Die prinzipielle Konstruktion der Haltezungen 11 sowie das Prinzip der Montage der Baueinheit aus Deckel 32 und Bürstentragplatte 10 sind dieselben wie bei der Ausführung nach den Fig. 1 bis 4. Es sind lediglich die Haltezungen 11 und ihre Lösestücke 16 so geformt, daß sie in die Aussparungen 50 des Deckels 32 hineingreifen und bündig mit der Außenseite des Deckels und des Gehäusemantels abschließen.

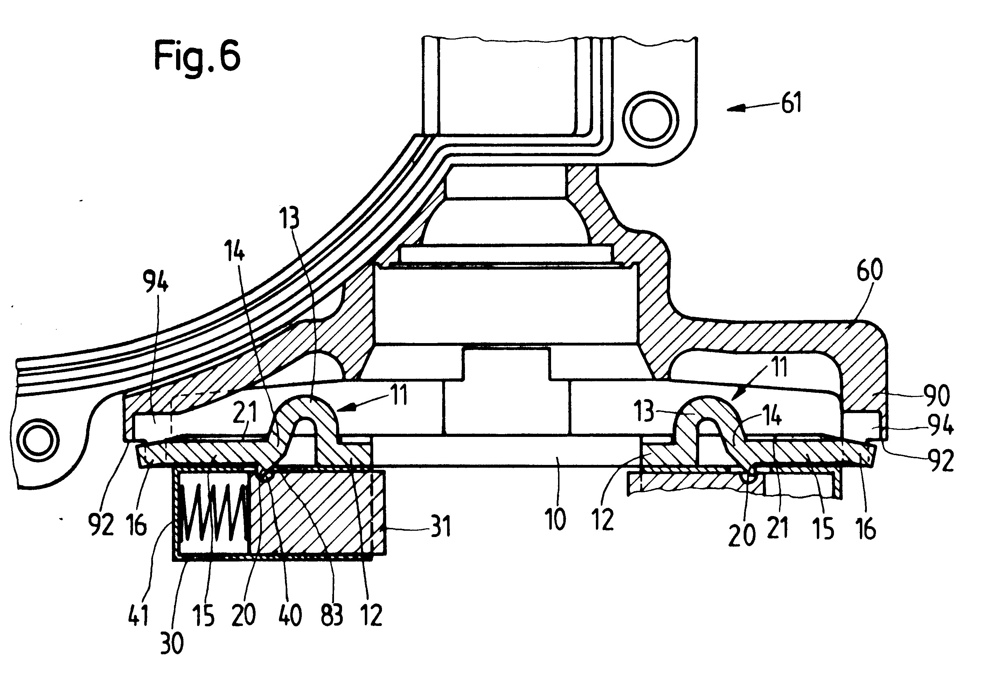

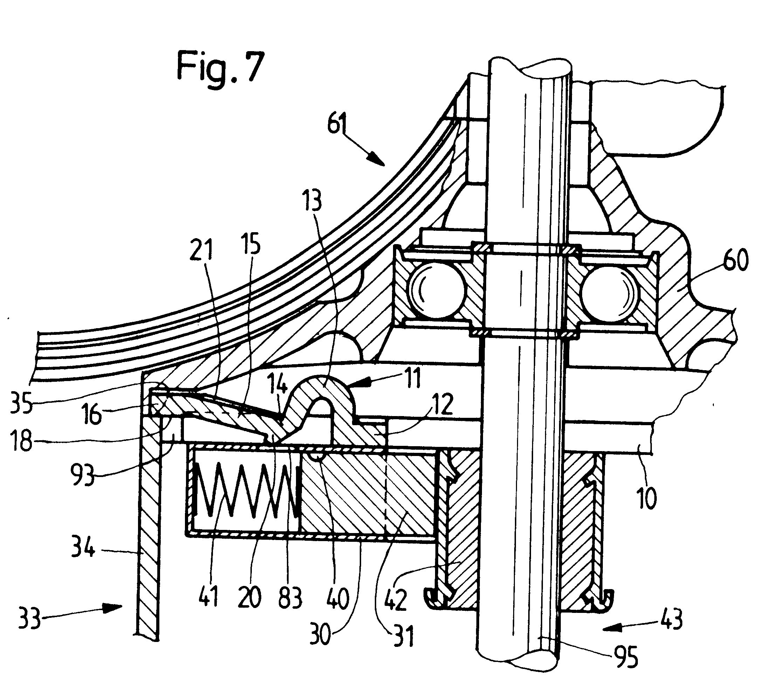

Bei dem in den Figuren 6 und 7 gezeigten Ausführungsbeispiel ist der Deckel 60 eines Motorengehäuses 33 ist einstückig mit einem Getriebegehäuse 61 ausgebildet und aus einem Metalloder Kunststoffdruckguß hergestellt. An dem Deckel ist eine aus elastischem Kunststoff bestehende Bürstentragplatte 10 befestigt, an der auf der dem Deckel gegenüberliegenden Seite mehrere längliche Köcher 30 als Halterung und Führung für die Bürsten 31 befestigt sind. In den Figuren ist jeweils nur ein Köcher und nur eine Bürste ganz gezeigt, da dies zum Verständnis der Erfindung genügt. Köcher 30 und Bürsten 31 können radial, jedoch auch tangential bezüglich der Achse der Bürstentragplatte 10 und des Deckels 60 angeordnet sein.

An die Bürstentragplatte 10 sind eine der Anzahl der Bürsten 31 entsprechende Anzahl von Haltezungen 11 einstückig angeformt. Die zu einem Köcher gehörende Haltezunge 11 erstreckt sich in Längsrichtung des Köchers und liegt in einer senkrecht auf der Bürstentragplatte 10 stehenden und durch die Mitte des Köchers 30 gehenden Ebene.

Wie bei der Ausführung nach den Figuren 1 bis 4 beginnt die Haltezunge 11 an einem inneren Ring 12 der Bürstentragplatte 10 und geht von diesem an der Seite, die der Seite, auf der die Bürstentragplatte 10 mit den Köchern 30 für die Kohlebürsten 31 bestückt ist, gegenüberliegt, in axialer Richtung ab. Die Haltezunge beschreibt dann einen ersten Bogen 13 von etwa 180° und dann einen weiteren entgegengesetzt gerichteten Bogen 14 von etwa 90°, der in einen geraden, in axialer Richtung auf Höhe des inneren Rings 12 liegenden Abschnitt 15 übergeht. Am freien Ende trägt die Haltezunge 11 ein Lösestück 16.

Am radial inneren Ende des ebenen Abschnitts 15 trägt jede Haltezunge 11 eine Rastnase 20, die die Form eines zur Achse der Bürstentragplatte 10 hin abfallenden Sägezahns besitzt. Radial außerhalb dieser Rastnase ist ein Verbiegen der Haltezungen 11 bei der Montage nicht vorteilhaft. Deshalb ist der ebene Abschnitt 15 auf der der Rastnase 20 gegenüberliegenden Seite durch eine Rippe 21 verstärkt. Jede Kohle 31 besitzt an ihrer der Bürstentragplatte 10 zugewandten Seite eine Vertiefung 40. Im Bereich der Rastnase 20 befindet sich in jedem Köcher 30 ein Durchbruch 83. Die Haltezungen 11 sind in Richtung auf die Köcher 30 vorgespannt, greifen in dem in Figur 6 gezeigten Montagezustand mit ihrer Rastnase 20 in die Vertiefung 40 der gegen die Kraft einer Druckfeder 41 zurückgeschobenen Kohlebürste 31 und halten diese in einem Abstand von der Achse der Bürstentragplatte 10, der größer ist als der Durchmesser des in Figur 7 gezeigten Kollektors 42 des Motorankers 43.

An den Deckel 60 ist ein Kragen 90 angeformt, dessen Außendurchmesser dem Außendurchmesser eines in Figur 7 eingezeichneten Gehäusemantels 34 entspricht. Der Kragen 90 ist an seiner dem Gehäusemantel 34 zugewandten Stirnseite mit einer Außenschulter 92 abgesetzt, deren Breite der Dicke des Gehäusemantels 34 entspricht. Damit sich die Haltezungen 11 bis in den Bereich der Außenschulter 92 erstrecken können, ist der die innere Begrenzung der Schulter 92 bildende Bund 93 des Kragens 90 im Bereich der Haltezungen 11 eingeschnitten. Außerdem besitzt der Kragen 90 für jede Haltezunge 11 eine Tasche 94, die sich radial bis in den Bereich der Außenschulter 92 erstreckt und sowohl radial als auch axial zu den Außenseiten des Deckels 60 hin abgeschlossen ist. Die axiale Tiefe der Taschen 94 ist etwas größer als die Dicke des Lösestücks 16 jeder Haltezunge. Auch die Breite jeder Tasche 94, also die Abmessung in Umfangsrichtung des Deckels 60, ist etwas größer als die Breite des Lösestücks 16 einer Haltezunge 11.

Bei der Montage eines Elektromotors nach den Figuren 6 und 7 wird zunächst die Bürstentragplatte 10 mit den verschiedenen Bauteilen, insbesondere mit den metallischen Köchern 30, den Druckfedern 41 und den Kohlebürsten 31 bestückt und dann am Deckel 60 befestigt. Die Kohlen 31 werden in die Köcher 30 zurückgeschoben und dabei von den Haltezugen 11 arretiert. Dann kann ohne Schwierigkeiten die Motorwelle 95 mit dem Kollektor 42 eingesetzt werden. Schließlich wird der Gehäusemantel 34 über den Anker des Motors geschoben. Dabei stößt der Gehäusemantel mit seiner dem Deckel 60 zugewandten Stirnseite gegen die Lösestücke 16 der Haltezungen 11, so daß diese bei der weiteren axialen Bewegung des Deckels 60 und des Gehäusemantels 34 gegeneinander ausgelenkt werden. Die Rastnasen 20 verlassen die Vertiefungen 40 der Kohlebürsten 31, so daß diese von den Druckfedern 41 gegen die Lauffläche des Kollektors 42 gedrückt werden. Wenn der Gehäusemantel 34 an der Außenschulter 92 des Gehäusekragens 90 anschlägt, sind die Lösestücke 16 der Haltezungen 11 in die Taschen 94 des Kragens 90 gelangt. Dieser Endzustand ist in Figur 7 dargestellt. Man erkennt, daß die die Lösestücke 16 der Haltezungen 11 aufnehmenden Taschen 94 im Deckel 60 nach außen vollkommen geschlossen sind. Es wird somit ein sehr dichtes Motorengehäuse erhalten.

Außerdem erkennt man, daß das Lösestück 16 mit seiner Fläche 18 voll auf der Stirnseite 35 des Gehäusemantels 34 aufliegt, da die Fläche 18 schräg zum Abschnitt 15 der Haltezunge 11 verläuft. Damit ist die Flächenpressung gering.

Es sind auch erfindungsgemäße Ausführungen einer elektrischen Maschine denkbar, bei denen die Haltezungen 11 mit ihren Lösestücken 16 in Aussparungen des Deckels hineinragen und sich darüberhinaus neben den Aussparungen im Deckel, Aussparungen im Gehäusemantel 34 befinden, die von gegenüber den Ausführungen nach Fig. 5 bis 7 größer geformten Lösestücken der Haltezungen ausgefüllt werden.

**Patentansprüche**

1.  Elektrische Maschine, insbesondere Elektromotor, mit einem stirnseitig durch einen Deckel (32) verschlossenen Gehäusemantel (34), mit einem innerhalb des Gehäuses (33) drehbar gelagerten Anker (43) mit einem Kollektor (42) sowie mit wenigstens einer vorzugsweise in einem an einer Bürstentragplatte (10) fixierten Köcher (30) geradlinig zum Kollektor (42) hin verschiebbar gelagerten Bürste (31), die in ihrer Arbeitsstellung federnd auf dem Kollektor (42) aufliegt und in einer Montagestellung durch eine vorzusweise an der Bürstentragplatte (10) angebrachte, auslenkbare Haltezunge (11) mit Abstand vom Kollektor (42) arretierbar ist, indem die Haltezunge (11) an der Bürste (31) anliegt, insbesondere in eine in die Bürste (31) eingeformte Vertiefung (40) eingreift, wobei während der Montage die Haltezunge (11) durch Angriff des Gehäusemantels (34) am Lösestück (16) auslenkbar und dadurch die Arretierung der Bürste (31) lösbar ist, dadurch gekennzeichnet, daß die Haltezunge (11) mit einem Lösestück (16) an ihrem freien Ende in eine stirnseitig offene Aussparung (36) des Gehäusemantels (34) hineinragt, in die es während der Montage gelangt, und daß das Lösestück (16) die Aussparung (36) vollständig verschließt.

2.  Elektrische Maschine, insbesondere Elektromotor, mit einem stirnseitig durch einen Deckel (32, 60) verschlossenen Gehäusemantel (34), mit einem innerhalb des Gehäuses (33) drehbar gelagerten Anker (43) mit einem Kollektor (42) sowie mit wenigstens einer vorzugsweise in einem an einer Bürstentragplatte (10) fixierten Köcher (30) geradlinig zum Kollektor (42) hin verschiebbar gelagerten Bürste (31), die in ihrer Arbeitsstellung federnd auf dem Kollektor (42) aufliegt und in einer Montagestellung durch eine vorzugsweise an der Bürstentragplatte (10) angebrachte, auslenkbare Haltezunge (11) mit Abstand vom Kollektor (42) arretierbar ist, indem die Haltezunge (11) an der Bürste (31) anliegt, insbesondere in eine in die Bürste (31) eingeformte Vertiefung (40) eingreift, wobei während der Montage die Haltezunge (11) durch Angriff des Gehäusemantels (34) am Lösestück (16) auslenkbar ist und dadurch die Arretierung der Bürste (31) lösbar ist, dadurch gekennzeichnet, daß die Haltezunge (11) mit einem Lösestück (16) an ihrem freien Ende bis über die Stirnseite (35) des Gehäusemantels (34) reicht und das Lösestück (16) in eine Aussparung (50, 94) des Deckels (32, 60) hineinragt, in die es während der Montage gelangt, und daß das Lösestück (16) die Aussparung (50, 94) vollständig verschließt.

3. Elektrische Maschine nach Anspruch 1 oder 2, dadurch gekennzeichnet, daß eine von außen sichtbare Fläche (17) des Lösestücks (16) im entspannten Zustand der Haltezunge (11) derart schräg verläuft, daß sie nach der Montage bündig mit der Außenseite des Gehäusemantels (34) bzw. des Deckels (32) abschließt.

4. Elektrische Maschine nach einem der Ansprüche 1 bis 3, dadurch gekennzeichnet, daß die der Stirnseite (35) des Gehäusemantels (34) zugewandte Fläche (18) des Lösestücks (16) im entspannten Zustand der Haltezunge (11) in einem solchen von 90° verschiedenen Winkel zur Achse der Bürstentragplatte (10) verläuft, daß sie nach der Montage an ihrer Außenkante auf der Stirnseite (35) des Gehäusemantels (34) aufliegt.

5. Elektrische Maschine nach Anspruch 4, dadurch gekennzeichnet, daß die der Stirnseite (35) des Gehäusemantels (34) zugewandte Fläche (18) des Lösestücks (16) nach der Montage flächig auf der Stirnseite (35) des Gehäusemantels (34) aufliegt.

6. Elektrische Maschine nach einem der Ansprüche 1, 3, 4, 5, dadurch gekennzeichnet, daß sich die Aussparung (36) im Gehäusemantel (34) von der Stirnseite (35) des Gehäusemantels (34) her konisch verjüngt und das Lösestück (16) der Haltezunge (11) entsprechende Form hat.

7. Elektrische Maschine nach einem der vorhergehenden Ansprüche, dadurch gekennzeichnet, daß die Haltezunge (11) am kollektorseitigen Ende einstückig an die Bürstentragplatte (10) angeformt ist.

8. Elektrische Maschine nach Anspruch 7, dadurch gekennzeichnet, daß die Haltezunge (11) von der Bürstentragplatte (10) in axialer Richtung abgeht und daß sie in einem ersten Bogen (13) von etwa 180° und einem zweiten entgegengesetzt gerichteten Bogen (14) von etwa 90° in einen im wesentlichen parallel zur Bürstentragplatte (10) liegenden Abschnitt (15) übergeht.

9. Elektrische Maschine nach einem der Ansprüche 2, 4, 5, 7, 8, dadurch gekennzeichnet, daß die Aussparung (94) im Deckel (60) an der dem Gehäusemantel (34) abgewandten Seite axial verschlossen ist.

10. Elektrische Maschine nach Anspruch 9, dadurch gekennzeichnet, daß die Aussparung (94) im Deckel (60) radial nach außen verschlossen ist.

11. Elektrische Maschine nach Anspruch 9 oder 10, dadurch gekennzeichnet, daß die Haltezunge (11) radial vor der Außenseite des Gehäusemantels (34) endet.

12. Elektrische Maschine nach einem der Ansprüche 9 bis 11, dadurch gekennzeichnet, daß sich die Aussparung (94) in einem Kragen (90) des Deckels (60) befindet.

13. Elektrische Maschine nach einem der Ansprüche 9 bis 12, dadurch gekennzeichnet, daß die axiale Abmessung der Aussparung (94) größer ist als die entsprechende Abmessung des Lösestücks (16) der Haltezunge (21).

14. Elektrische Maschine nach einem der Ansprüche 9 bis 13, dadurch gekennzeichnet, daß der Deckel (60) in einem Spritzgußverfahren hergestellt ist.

**Claims**

1. An electrical machine, especially an electric motor, comprising a housing cover (34) closed at its front side by a lid (32), and an armature (43) rotatably located within the housing (33) with a collector (42) as well as comprising at least a brush (31) preferably located in a tube (30) fixed to a brush holder plate (10) and straight movable towards the collector (42), which brush is springily lying on the collector (42) in the operational position and can be arrested in an assembly possition at a certain distance of the collector (42) by a deflectable locking lug (11) preferably fixed onto the brush holder plate (10) and lying on the brush (31), especially engaging into a cavity (40) formed into the bruch (31), wherein during the assembly the locking lug (11) is deflectable by engagement of the housing cover (34) on the releasing part (16) and the locking of the brush (31) can be released thereby, characterised in that the locking lug (11) with a releasing part (16) projects into a recess (36) of the housing cover (34) by means of its free end, into which recess it is inserted during the assembly, and that the releasing part (16) completely closes the recess (36).

2. An electrical machine, especially an electric motor, comprising a housing cover (34) at its front side closed by a lid (32, 60), and an armature (43) rotatably located within the housing (33) with a collector (42) as well as comprising at least a brush (31) preferably located in a tube (30) fixed to a brush holder plate (10) and straight movable towards the collector (42), which brush is springily lying on the collector (42) in its operational position and can be arrested in an assembly position at a certain distance of the collector (42) by a deflectable locking lug (11) preferably fixed onto the brush holder plate (10) and lying on the brush (31), especially engaging into a cavity (40) formed into the brush (31), wherein during the assembly the locking lug (11) is deflectable by engagement of the housing cover (34) on the releasing part (16) and the locking of the brush (31) can be released thereby, characterised in that the locking lug (11) with its free end extends beyond the front side (35) of the housing cover (34) and the releasing part (16) projects into a recess (50, 94) of the lid (32, 60), into which it is inserted during the assembly, and that the releasing part (16) completely closes the recess (50, 94).

3. An electric machine according to claim 1 or 2, characterised in that an area (17) of the releasing part (16) that can be seen from the outside is sloping to such an extent - while the locking lug (11) is detensioned - that after the assembly it is even with the outside of the housing cover (34) and of the lid (32) respectively.

4. An electric machine according to one of claims 1 to 3, characterised in that the area (18) of the relasing part (16) facing the front side (35) of the housing cover (34) is sloping to such an extent - while the locking lug (11) is detensioned - extends at an angle different from 90° with respect to the axis of the brush holder plate (10) that it is lying on the outer edge of the front side (35) of the housing cover (34) after the assembly.

5. An electric machine according to claim 4, characterised in that the area (18) of the releasing part (16) facing the front side (35) of the housing cover (34) is totally lying on the front side (35) of the housing cover (34) after the assembly.

6. An electric machine according to one of the claims 1, 3, 4, 5, characterised in that the recess (36) in the housing cover (34) tapers conically from the front side (35) of the housing cover (34) onwards and that the releasing part (16) of the locking lug (11) has a corresponding form.

7. An electric machine according to one of the preceding claims, characterised in that the locking lug (11) is integrally formed onto the brush holder plate (10) at its end towards the collector.

8. An electric machine according to claim 7, characterised in that the locking lug (11) goes off the brush holder plate (10) in axial direction and that it changes into a section (15) by a first curve (13) of about 180° and by a second curve (14) of about 90° in the opposite direction, which section (15) is substantially parallel to the brush holder plate (10).

9. An electric machine according to one of claims 2, 4, 5, 7, 8, characterised in that the recess (94) in the lid (60) is axially closed on the side turned away from the housing cover (34).

10. An electric machine according to claim 9, characterised in that the locking lug (11) is radially closed towards the outside.

11. An electric machine according to claim 9 or 10, characterised in that the locking lug (11) radially ends in front of the outside of the housing cover (34).

12. An electric machine according to one of claims 9 to 11, characterised in that the recess (94) is in a collar (90) of the lid (60).

13. An electric machine according to one of claims 9 to 12, characterised in that the axial measurement of the recess (94) is bigger than the corresponding measurement of the releasing part (16) of the locking lug (21).

14. An electric machine according to one of the claims 9 to 13, characterised in that the lid (60) is made by injection-moulding.

**Revendications**

1. Machine électrique, notamment moteur électrique, comportant une enceinte (34) de la carcasse fermée par un couvercle (32), un induit (43) monté rotatif à l'intérieur de la carcasse (33) et comportant un collecteur (42) ainsi qu'au moins un balai (31), monté de préférence dans un logement (30) fixé à une plaque porte-balais (10), de manière à être déplaçable selon un mouvement rectiligne en direction du collecteur (42) et qui, dans sa position de travail, prend appui élastiquement sur le collecteur (42) et, dans une position de montage, peut être bloqué à distance du collecteur (42) par une languette de retenue pouvant être écartée (11), qui est montée de préférence sur la plaque porte-balais, la languette de retenue (11) s'appliquant contre le balai (31) et s'engageant notamment dans un renfoncement (40) ménagé dans le balai (31), et dans laquelle, pendant le montage, la languette de retenue (11) peut s'écarter par engagement de l'enceinte (34) de la carcasse avec un élément de libération (16) et de ce fait le blocage du balai (31) peut être supprimé, caractérisée en ce que la languette de retenue (11) pénètre, par un élément de libération (16) situé à son extrémité libre, dans un évidement ouvert frontalement (36) de l'enceinte (34) de la carcasse, dans laquelle elle pénètre lors du montage, et que l'élément de libération (16) ferme complètement l'évidement (36).

2. Machine électrique, notamment moteur électrique, comportant une enceinte (34) de la carcasse fermée par un couvercle (32,60), un induit (43) monté rotatif à l'intérieur de la carcasse (33) et comportant un collecteur (42) ainsi qu'au moins un balai (31), monté de préférence dons un logement (30) fixé à une plaque porte-balais (10), de manière à être déplaçable selon un mouvement rectiligne en direction du collecteur (42) et qui, dans sa position de travail, prend appui élastiquement sur le collecteur (42) et, dans une position de montage, peut être bloqué à distance du collecteur (42) par une languette de retenue pouvant être écartée (11), qui est montée de préférence sur la plaque porte-balais, la languette de retenue (11) s'appliquant contre le balai (31) et notamment s'engageant dans un renfoncement (40) ménagé dans le balai (31), et dans laquelle, pendant le montage, la languette de retenue (11) peut s'écarter par engagement de l'enceinte (34) de la carcasse avec un élément de libération (16) et de ce fait le blocage du balai (31) peut être supprimé, caractérisée en ce que la languette de retenue (11) s'étend, par un élément de libération (16) situé sur son extrémité libre, jusqu'au-dessus de la face frontale (35) de l'enceinte de la carcasse (34) et que l'élément de libération (16) pénètre dans un évidement (50,94) du couvercle (32,60), dans lequel il pénètre lors du montage, et que l'élément de libération (16) ferme complètement l'évidement (50,94).

3. Machine électrique selon la revendication 1 ou 2, caractérisée en ce qu'une surface (17), visible de l'extérieur, de l'élément de libération (16) est disposée obliquement, lorsque la languette de retenue (11) est à l'état détendu, de sorte qu'après le montage, cette surface se termine de niveau avec la face extérieure de l'enceinte (34) de la carcasse ou du couvercle (32).

4. Machine électrique suivant l'une des revendications 1 à 3, caractérisée en ce que, lorsque la languette de retenue (11) est à l'état détendu, la surface (18) de l'élément de libération (16), qui est tournée vers la face frontale (35) de l'enceinte (34) de la carcasse, fait, par rapport à l'axe de la plaque porte-balais (10), un angle différent de 90°, tel qu'après le montage, cette surface s'applique par son bord extérieur sur la face frontale (35) de l'enceinte (34) de la carcasse.

5. Machine électrique selon la revendication 4, caractérisée en ce que la surface (18) de l'élément de libération (16), qui est tournée vers la surface frontale (35) de l'enceinte (34) de la carcasse, s'applique, après le montage, à plat sur la face frontale (35) de l'enceinte (34) de la carcasse.

6. Machine électrique selon l'une des revendications 1, 3, 4, 5, caractérisée en ce que l'évidement (36) ménagé dans l'enceinte (34) de la carcasse se rétrécit avec une forme conique à partir de la face frontale (35) de l'enceinte de la carcasse (35) et que l'élément de libération (16) possède une forme qui correspond à la languette de retenue (11).

7. Machine électrique selon l'une des revendications précédentes, caractérisée en ce que la languette de retenue (11) est formée sur l'extrémité située côté collecteur, de manière à être réunie d'un seul tenant à la plaque porte-balais (10).

8. Machine électrique selon la revendication 7, caractérisée en ce que la languette de retenue (11) s'étend axialement à partir de la plaque porte-balais (10) et qu'elle se prolonge, par l'intermédiaire d'un premier coude (13) qui s'étend sur environ 180° et d'un second coude (14) dirigé en sens opposé et qui s'étend sur environ 90°, par une section (15) sensiblement parallèle à la plaque porte-balais (10).

9. Machine électrique selon l'une des revendications 2, 4, 5, 6, 7, 8, caractérisée en ce que l'évidement (94) ménagé dans le couvercle (60) est fermé axialement sur le côté tourné à l'opposé de l'enceinte (34) de la carcasse.

10. Machine électrique selon la revendication 9, caractérisée en ce que l'évidement (94) ménagé dans le couvercle (60) est fermé radialement vis-à-vis de l'extérieur.

11. Machine électrique selon la revendication 9 ou 10, caractérisée en ce que la languette de retenue (11) se termine radialement en-deçà de la face extérieure de l'enceinte (34) de le carcasse.

12. Machine électrique selon l'une des revendications 9 à 11, caractérisée en ce que l'évidement (94) est ménagé dans un collet (90) du couvercle (60).

13. Machine électrique selon l'une des revendications 9 à 12, caractérisée en ce que la dimension axiale de l'évidement (94) est supérieure à la dimension correspondante de l'élément de libération (16) de la languette de retenue (21).

14. Machine électrique selon l'une des revendications 9 à 13, caractérisée en ce que le couvercle (60) est réalisé selon un procédé de moulage par injection.

EP 0 257 407 B1

# Fig. 1

# Fig. 2

# Fig. 3

10

# Fig. 4

# Fig. 5

Fig.6

EP 0 257 407 B1

Fig.7

EP 0 257 407 B1